Europäisches Patentamt

European Patent Office

Office européen des brevets

(19)

(11) Publication number: **0 296 705**
**A2**

(12) # EUROPEAN PATENT APPLICATION

(21) Application number: **88304087.5**

(22) Date of filing: **05.05.88**

(51) Int. Cl.4: **G01N 21/31 , G01N 21/41 , G01N 21/47**

(30) Priority: **22.05.87 GB 8712135**

(43) Date of publication of application:
**28.12.88 Bulletin 88/52**

(84) Designated Contracting States:
**DE FR GB IT**

(71) Applicant: **PLESSEY OVERSEAS LIMITED**
**Vicarage Lane**
**Ilford Essex IGI 4AQ(GB)**

(72) Inventor: **Dakin, John Phillip**
**Firview Whinwhistle Road East Wellow**
**Romsey Hants(GB)**
Inventor: **Matthews, Robert Barry**
**58 Winchester Road Chandlers Ford**
**Eastleigh Hants, SO5 2GN(GB)**

(74) Representative: **Elliott, Frank Edward**
**The Plessey Company plc. Intellectual**
**Property Department Vicarage Lane**
**Ilford, Essex IG1 4AQ(GB)**

(54) Optical sensing arrangements.

(57) The invention provides an optical sensor arranged to monitor the ratio of the constituent components of a mixed system where an optical characteristic of the system is dependant upon that ratio. Particularly, a fuel management system is described where the optical sensor is used to monitor the vapour/liquid ratio in a fuel supply to an engine.

EP 0 296 705 A2

## OPTICAL SENSING ARRANGEMENTS

This invention relates to sensing arrangements for optically sensing the ratio of the components of a mixed system. The mixed system may comprise a liquid and its vapour, a liquid and its vapour and/or air, or two different fluids, in a fluid flow. A particular application of the sensor is in combination with a fuel management system for an aircraft engine where it is desired to determine the ratio of fuel to its vapour and air in the feed pipe to a fuel pump. Such fuel pumps have difficulty in providing a required output when the vapour/liquid ratio is high, for example, 0.35. A requirement exists for pumping fuel at ratios higher than the example and this can be effected more readily if the ratio can be monitored and the pump output adjusted accordingly.

It is an object of the present invention to provide an optical sensor for determining the ratio of components in a system, such as the determination of the vapour/liquid ratio in a fuel management system.

A further object of the present invention is the provision of a fuel management system in which the vapour/liquid ratio is determined optically.

According to the present invention, there is provided an optical sensor for determining the ratio of constituent components of a system comprising a plurality of fluid components flowing in a flow passage, the components each having a different optical characteristic the sensor including first fibre optic means for conducting light to the flow passage to impinge upon the system flowing therein, second fibre optic means for conducting light returned therefrom after impingement, and means for detecting changes in the returned light and for determining the ratio of the constituent components of the system in dependence upon the detected changes.

The optical characteristic of the components of the system may be absorption or refractive index. In the case of a fuel/vapour or fuel/vapour and/or air mixed system, the optical characteristic may be the scatter of light by the bubbles in the system.

The invention will be described further, by way of example, with reference to the accompanying drawings, in which:-

Figure 1 is a diagrammatic representation of a first form of sensing cell of an optical sensor in accordance with the present invention;

Figures 2 to 5 are similar views of further embodiments of sensing cells in accordance with the present invention; and,

Figure 6 is a diagrammatic representation of part of a fuel management system incorporating an optical sensor, in accordance with the present invention.

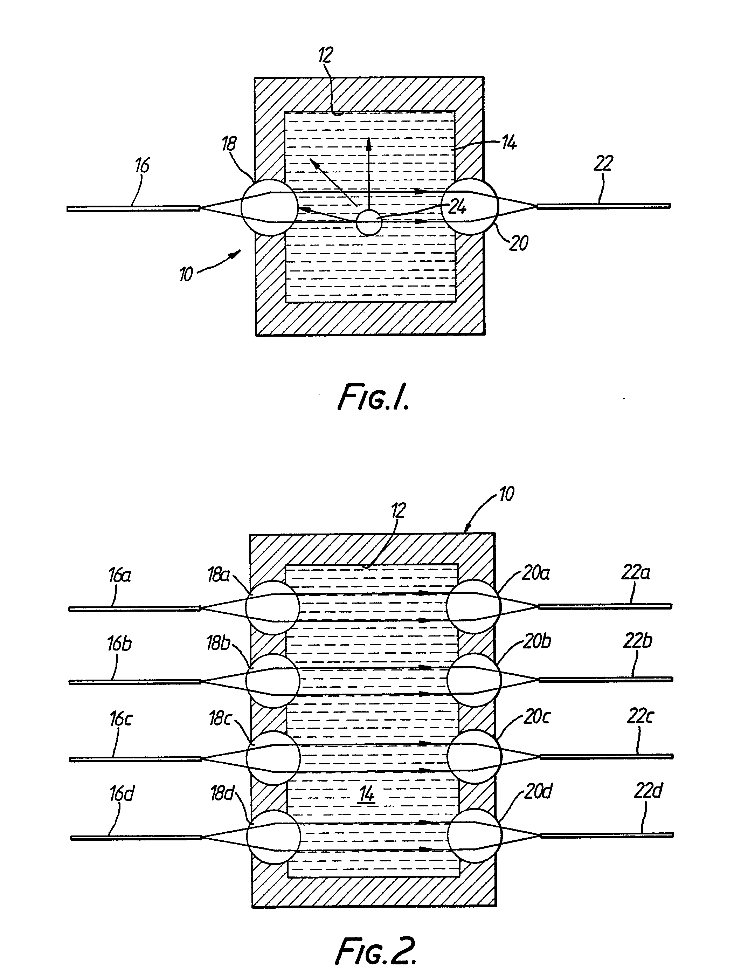

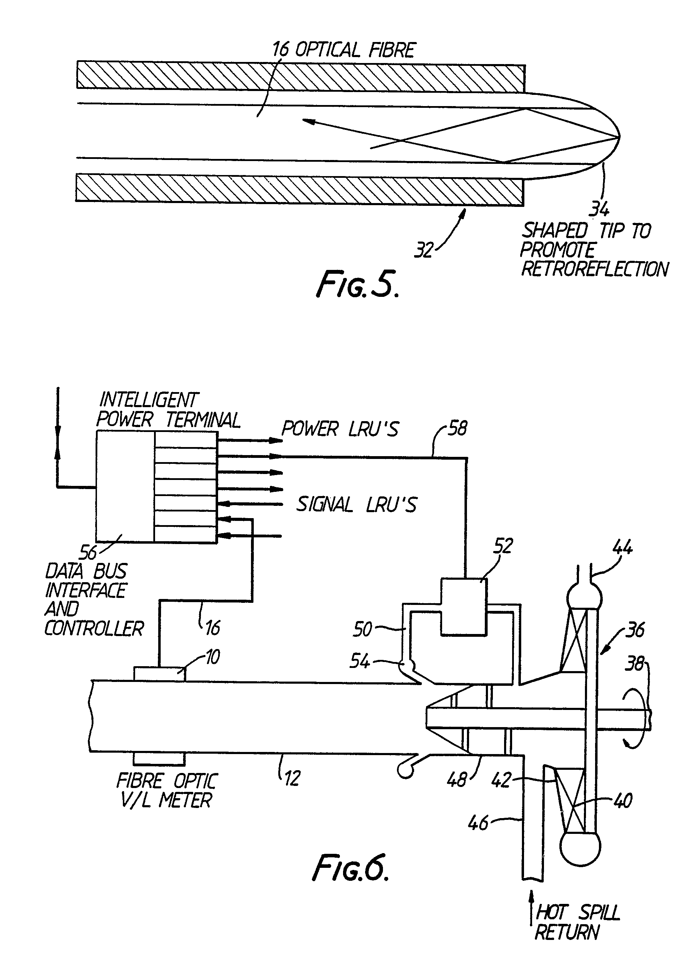

Referring firstly to Figure 1, there is shown a sensing cell 10 forming part of a feed passage 12 wherethrough a mixed fluid system 14 flows. At a first side of the cell 10, an optical fibre 16 is provided serving to conduct light of a particular wavelength from a source (See Figure 6) to the cell 10. The fibre 16 terminates in a projection means 18 serving to expand the cross-sectional area of the beam of light. At the opposite side of the passage 12, a light gathering means 20 is provided. The light gathering means 20 serves to concentrate the gathered light into a narrow beam which impinges upon an optical fibre 22 which conducts the gathered light to a detecting means described below.

The light projected into the cell may be of a single particular wavelength or preferably is of two wavelengths. The constituent components of the system have a different optical characteristic. For example, the liquid, which may be fuel, may absorb light of one of the wavelengths whereas its vapour (or air) depicted by a bubble 24 may not. In this way mis-reading due to scattering of the input light is avoided. Both wavelengths will be scattered approximately equally by bubbles but that wavelength which is absorbed will be attenuated by the liquid through which it passes whereas the other wavelength will not. In this way, irrespective of the scattering caused by bubbles of the gaseous phase, the amount of liquid present can be determined.

In Figures 2 to 5 like reference numerals to those used in Figure 1 have been employed to denote similar parts.

As shown in Figure 2, more accurate determination of the component ratio of the fluid system 14 flowing through a passage 12 can be determined by a cell 10 having a plurality of projecting means 18 and opposed light gathering means 20. A plurality of optical fibres 16 may feed light to the cell 10 from one or a plurality of light sources. Alternatively, there may be a single fibre 16 the output of which is split between the projection means 18. Similarly one or a plurality of fibres 22 may conduct light from the gathering means 20 to conduct the same to one or a plurality of detectors.

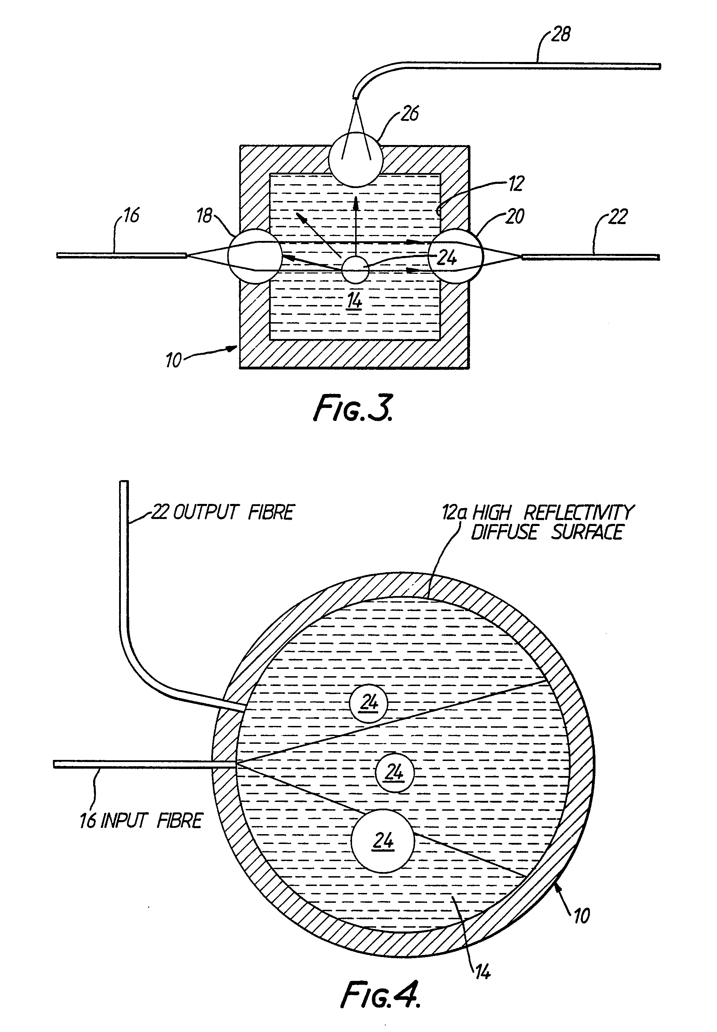

In the embodiment of optical sensing cell shown in Figure 3, an additional light gathering means 26 is provided for collecting scattered light and for serving to conduct the light to a scattering detector. A further measure of scattered light (other than attenuation of a non-absorbed wavelength) can be determined in this way. Such an arrangement can be operated with a single wavelength light source.

The embodiment of Figure 4 has a fluid passage 12a of circular cross-section. The interior surface of the passage 12 is coated with or is formed of a highly reflective diffusing material. The optical fibre 16 injects the light flowing therethrough directly into the fluid system 14 in the passage 12.

Bubbles 24 provide scattering of the injected light whereas most of the light transmitted by the fluid is absorbed after multiple reflections. A light receiver, constituted by an end 30 of an optical fibre 22, extends into the fluid system 14 and receives mainly scattered light and a very small portion of the attenuated injected light. The received light is passed to a detector whereat a determination can be made of the component ratio.

Figure 5 illustrates a very simple embodiment of an optical sensor 32 for use in a sensing cell 10. The sensor 32 comprises an end of an optical fibre 16 which has been shaped to provide for retro-reflection by the end surface 34 of light fed thereto by a light source. The extent of retro-reflection will depend upon the refractive index of the medium in contact with the end surface 34 of the fibre. Such a sensor can be located in direct contact with the flow of fluid 14 in a passage 12. Depending on the ratio of areas of the surface contacted by constituent components of the mixture of fluids 14, more or less light will be retro-reflected to a remote sensor adjacent the other end of the fibre 16. In view of instantaneous variations in the ratio of components in contact with the surface 34, some form of averaging means is necessary.

Any of the sensing cells described above in relation to Figures 1 to 5 may be used in a fuel management system as shown in Figure 6. The system there shown is for an aircraft engine (not shown) and comprises a centrifugal pump 36 driven from a drive shaft 38 having an impeller 40 located within a housing 42. The pump 36 has a radial outlet 44 supplying fuel to an engine and a hot spill return 46, from the engine, returns excess fuel to the pump inlet.

The pump inlet is coupled to an inducer 48. The inducer includes a fuel feedback path 50 through a flow regulator 52 to a vapour suppressing jet pump inlet 54 upstream of the inducer 48. The inducer is fed by a passage 12 which is preferably of circular cross-section. The passage 12 includes an optical sensor 10 as hereinbefore described.

A control means 56 is provided. The control means 56 includes one or more light sources for feeding light through an optical fibre or fibres 16 to the sensor 10. The fibre or fibres 16 (acting as fibre 18) serves to return modified light to a detector or detectors forming part of the control means 56.

The control means 56, in dependence upon the determination of the vapour/liquid ratio of fuel 14 in the passage 12 sends control signals, preferably by a fibre optic cable 58 to the flow regulator 52 to control the feedback flow and to a motor (not shown) powering the drive shaft 38 to control the rate at which the pump endeavours to deliver the fuel/vapour mixture to the engine.

The invention is not confined to the precise details of the foregoing examples and variations may be made thereto. For instance, in an aircraft environment, where immunity to noise is essential, connections to remote sensors are made by optical fibre. However, in some circumstances, the light source and/or the the detector may be located with the optical sensor cell and the determined ratio transmitted to control means by electrical signals. Solid state light sources are most appropriate as their output may be considered monochromatic. However other sources, appropriately filtered may be used where light of a particular wavelength is required. The term light is used herein to describe electromagnetic radiation of the kind normally carried by optical fibres and relates to a range of wavelengths greater than that of the visible spectrum.

Although described in relation to a fuel management system, it will be appreciated that the optical sensors of the present invention may be used to monitor any mixed system of which optical characteristics provide a response in dependence upon the ratio of the constituent components of the system.

## Claims

1. An optical sensor for determining the ratio of constituent components of a system comprising a plurality of fluid components flowing in a flow passage, the components each having a different optical characteristic the sensor including first fibre optic means for conducting light to the flow passage to impinge upon the system flowing therein, second fibre optic means for conducting light returned therefrom after impingement, and means for detecting changes in the returned light and for determining the ratio of the constituent components of the system in dependence upon the detected changes.

2. An optical sensor as claimed in claim 1 comprising a source of light of a particular wavelength, an optical fibre for conducting light from the source into the passage, the optical fibre terminating in a shaped end providing retro-reflection in dependence upon contact of the shaped end with the fluid system for determining the ratio of constituent components of the fluid system where the different optical characteristics are refractive indices.

3. An optical sensor as claimed in claim 1 for determining the ratio where the different optical characteristics are absorption comprising a source of light of at least one particular wavelength, an optical fibre for conducting light from the source to the passage, and optical means for projecting the light into the passage.

4. An optical sensor as claimed in claim 3 wherein the interior of the passage serves to reflect light projected thereinto to an optical means for gathering the reflected light and for conducting the gathered light to the detecting means.

5. An optical sensor as claimed in claims 3 and 4 wherein the optical fibre and the projecting means also constitute the optical means for gathering the reflected light and for conducting the gathered light to the detecting means.

6. An optical sensor as claimed in claim 1 comprising a source of light, fibre optic means for ducting the light from the source to the passage, means for projecting the light into the passage, a receiver for receiving light scattered by the constituent components of the fluid system in the passage, and fibre optic means for conducting received light to the detecting means.

7. An optical sensor as claimed in any preceding claim wherein there is at least one light source, at least one optical fibre for conducting light from the at least one source to the passage and at least one optical projection means for projecting the light into the passage.

8. An optical sensor as claimed in any preceding claim including at least an optical fibre for conducting modified light from the passage to the detecting means.

9. An optical sensor substantially as hereinbefore described with reference to and as illustrated in Figure 6 and any one of Figures 1 to 5.

10. A fuel management system for an aircraft engine comprising a pump, a feed passage from a fuel storage means to the pump, control means for controlling the rate at which fuel is pumped by the pump, and an optical sensor as claimed in any preceding claim mounted on the feed passage to the pump, the control means controlling the pump in dependence upon the ratio of the constituent components of the fuel in the passage as determined by the detecting means.

11. An aircraft fuel management system substantially as hereinbefore described with reference to the accompanying drawings.

*FIG.1.*

*FIG.2.*

FIG.3.

22 OUTPUT FIBRE

12a HIGH REFLECTIVITY
DIFFUSE SURFACE

16 INPUT FIBRE

FIG.4.

16 OPTICAL FIBRE

32

34
SHAPED TIP TO
PROMOTE
RETROREFLECTION

*FIG.5.*

INTELLIGENT
POWER TERMINAL

POWER LRU'S

58

SIGNAL LRU'S

56

DATA BUS
INTERFACE
AND
CONTROLLER

16

10

52

50

54

44

36

38

48

42

40

46

12

FIBRE OPTIC
V/L METER

HOT SPILL
RETURN

*FIG.6.*